# EUROPEAN PATENT SPECIFICATION

(11) **EP 3 798 703 B1**
(45) Date of publication and mention of the grant of the patent: **18.11.2026**
(21) Application number: 19306209.8
(22) Date of filing: 26.09.2019
(51) Int. Cl.: G02B 6/44, H01B 11/22, H01B 7/04, D07B 1/02, G02B 6/50

(54) **CABLE FOR DOWNHOLE USE**
KABEL FÜR DEN EINSATZ IN EINEM BOHRLOCH
CÂBLE À UTILISER EN FOND DE TROU

(43) Date of publication of application: 31.03.2021
(73) Proprietor: Services Pétroliers Schlumberger, 75007 Paris (FR); Schlumberger Technology B.V., 2514 JG The Hague (NL)
(72) Inventor: CHEVILLARD, François, 80100 Abbeville (FR); CORRE, Pierre-Yves, 80100 Abbeville (FR)
(74) Representative: Schlumberger Intellectual Property Department

(56) References cited:
- CA-A1- 2 573 418
- CA-A1- 2 602 537
- DE-A1- 10 016 536
- US-A- 4 059 951
- US-A1- 2008 128 152
- US-A1- 2011 240 312
- US-A1- 2015 354 292
- ANONYMOUS: "PEEK Vs. PEK Vs. PTFE | Greene Tweed", 25 March 2019 (2019-03-25), XP055679495, Retrieved from the Internet <URL:https://www.gtweed.com/materials/thermoplastics-and-composites/peek-vs-pek-vs-ptfe/> [retrieved on 20200325]
- ANONYMOUS: "Thermoplastic - Wikipedia", 4 April 2017 (2017-04-04), XP055362242, Retrieved from the Internet <URL:https://en.wikipedia.org/wiki/Thermoplastic> [retrieved on 20170405]
- MATWEB: "Overview of materials for High Density Polyethylene (HDPE), Ultra High Molecular Weight", 26 April 2018 (2018-04-26), pages 1 - 3, XP093228492, Retrieved from the Internet <URL:https://www.matweb.com/search/DataSheet.aspx>
- ANONYMOUS: "The Engineering ToolBox (2004). Friction - Friction Coefficients and Calculator", 31 December 2004 (2004-12-31), pages 1 - 15, XP093229058, Retrieved from the Internet <URL:https://www.engineeringtoolbox.com/friction-coefficients-d_778.html>

## Description

### BACKGROUND

The disclosure relates to a cable, in particular for downhole use, and a method for manufacturing such cable.

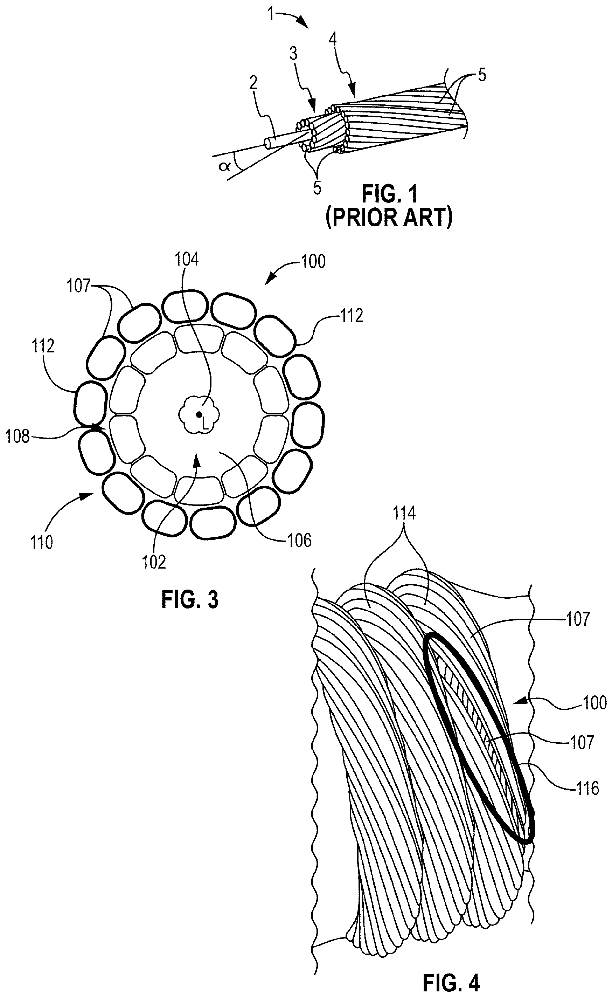

For performing operations in a wellbore, downhole tools are currently lowered in the wellbore either with a slickline cable or with a wireline cable. A slickline cable comprises a single metallic wire, generally made of steel, having good mechanical properties, such a breaking strength of 300 daN to a 1,500 daN, preferably from 600 to 1,000 daN, that is, in some embodiment, coated with an insulated coating. As shown on FIG. 1, wireline cable 1 is a cable comprising one or more central conductors 2 (here, one conductor) on which are arranged a plurality of layers 3,4 of metallic armor wires 5, generally made of steel, helically wrapped around the one or more central conductors, generally so that each armor wire contacts the two adjacent armor wires. Such cable architecture with metallic armor wires provides strength during logging operation.

However, density of the steel is such that wireline cables and, to a lesser extent, slickline cables are heavy and require a lot of energy to deploy it and convey the tool. Further, a typical wireline cable with metallic armor wires on the outside diameter thereof has high friction with the wellbore including the casing and the like and a high amount of energy is used to overcome the friction. Moreover, it might be difficult to reach very deep wells as the metallic reinforced cable have a risk to break under their own weight.

Therefore, reducing the weight of the cable to perform more efficient downhole jobs is an objective in the oil and gas fields. The weight reduction shall not however be detrimental to the mechanical properties of the cable and to the tool operation.

DE 10016536 A1 describes a reinforcing element for use in cables consisting of many parallel, untwisted single filaments embedded in a thermoplastic adhesive matrix to form a long core with an essentially constant cross-section. The core is also enveloped in a skin (S) consisting of another thermoplastic adhesive containing a homogeneously dispersed, water-absorbent swelling agent, so that the core expands in contact with water. CA 2602537 A1 describes an electrical cable including insulated primary conductors and at least one insulated secondary conductor, which extend along the cable. The primary conductors define interstitial spaces between adjacent primary conductors and the primary conductors have approximately the same diameter. The primary conductors include power conductors and a telemetric conductor. The secondary conductor(s) each have a diameter that is smaller than each of the diameters of the primary conductors, and each secondary conductor is at least partially nested in one of the interstitial spaces. CA 2573418 A1 describes electric cables with improved armor wires used with wellbore devices. The cables include at least one insulated conductor and one or more armor wires surrounding the insulated conductor. The armor wires include a low density core surrounded by a corrosion resistant alloy clad. The low density core may be based upon titanium or titanium alloys. US2011/240312 describes a cable comprising at least one internal conductor, a first layer of polymer insulating the at least one internal conductor, a second layer of polymer surrounding the at least one internal conductor and the first layer of polymer to create an outer circular profile, a third layer of polymer layered over the second layer of polymer, a first layer of armor wire strength members cabled over the third layer of polymer at a first lay angle, a fourth layer of polymer positioned around the first layer of armor wire strength members, a second layer of armor wire strength members cabled over the fourth layer of polymer at a second lay angle different from the first lay angle and a fifth layer of polymer surrounding the second layer of armor wire strength members.

### SUMMARY

The present invention resides in a cable as defined in claim 1, a wellbore installation as defined in claim 9 and a method of manufacturing a downhole cable as defined in claim 10.

The cable according to the disclosure has sufficient mechanical properties due to the properties of reinforcing fibers whereas it reduces the density and weight of the cable, enabling to reduce power when operating downhole tool and also enabling new and more economical choices of design for the well site installation.

### BRIEF DESCRIPTION OF THE DRAWINGS

Various aspects of this disclosure may be better understood upon reading the following detailed description and upon reference to the drawings in which:
FIG. 1 is a perspective exploded view of a wireline cable according to the prior art,
FIG. 2A is a schematic drawing of a well site installation according to an embodiment of the disclosure,
FIG. 2B is a detailed view of a portion of the well site installation of FIG. 2A,
FIG. 3 is a cross section of a cable according to one example that does not form part of the present invention ,
FIG. 4 is a perspective view of the cable of FIG. 3 when wound on a drum,
FIG. 5 is a schematic view of a detail of the cable of FIG. 3,
FIG. 6 is a cross section of a cable according to another example that does not form
   part of the present invention,
FIG. 7 is a perspective view of a portion of a cable according to another example that does not form part of the present invention,
FIG. 8-10 are cross sections of cables according to other examples that do not form part of the present invention,
FIG. 11 is a perspective view of a portion of a cable according to an embodiment of the present invention
FIG. 12 is a cross-section of a cable including the portion of FIG. 11, according to an embodiment of the invention.
FIG. 13 is a flowchart of a manufacturing method of a cable according to an embodiment of the invention,
FIG. 14 is a schematic drawing of a manufacturing line of the cable according to the manufacturing method of FIG. 13,

### DETAILED DESCRIPTION

One or more specific embodiments of the present disclosure will be described below. These described embodiments are examples of the presently disclosed techniques. Additionally, in an effort to provide a concise description of these embodiments, some features of an actual implementation may not be described in the specification. It should be appreciated that in the development of any such actual implementation, as in any engineering or design project, numerous implementation-specific decisions may be made to achieve the developers' specific goals, such as compliance with system-related and business-related constraints, which may vary from one implementation to another. Moreover, it should be appreciated that such a development effort might be complex and time consuming, but would still be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features.'

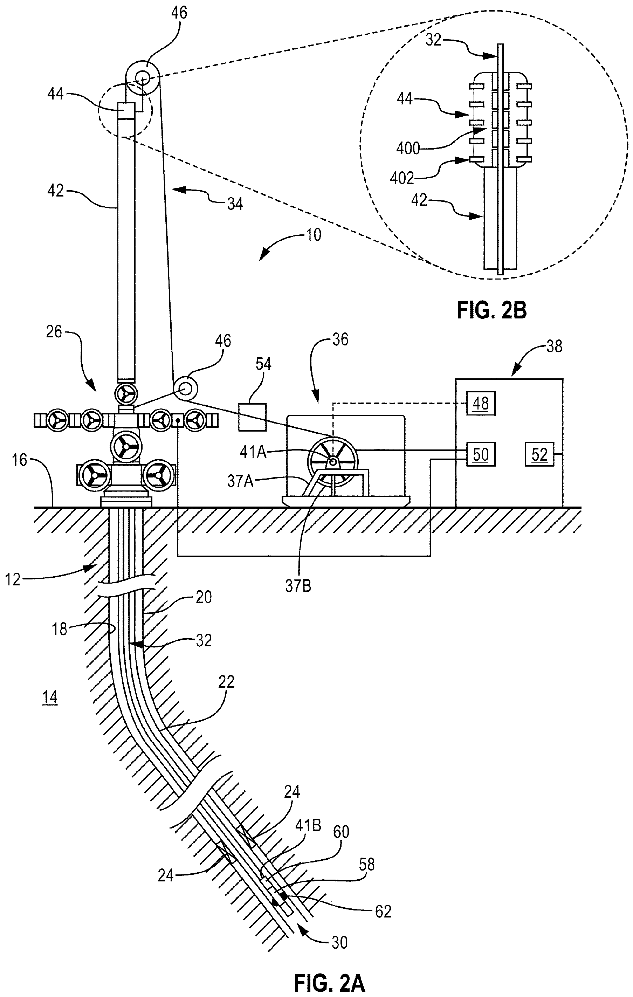

FIG. 2 is a schematic drawing of an installation 10 including a cable for downhole use according to an embodiment of the disclosure. This installation 10 is intended to perform operations in a fluid production or injection well 12 made in the subsoil 14.

These operations are applied by means of a downhole assembly 30 for carrying out actions and/or perform measurements at the bottom of the well 12, such as perforations, cuttings by means of a torch, zonal isolation operations, jarring operations or further operations for setting tools into place such as setting into place a seal gasket or anchoring of a tool. Such operations may also include formation evaluation including assessing properties of the formation via sensors of the downhole assembly. These operations are carried out in any point of the well 12, from the surface 16.

The fluid produced in the well 12 is for example a hydrocarbon such as petroleum or natural gas and/or another effluent, such as steam or water, the well is an "injector" well into which liquid or gas is injected. The production tubing may contain one or several different types of fluid.

The well 12 is made in a cavity 18 positioned between the surface 16 of the ground and the fluid layer to be exploited (not shown) located in depth in a formation of the subsoil 14.

The well 12 generally includes an outer tubular duct 20, designated by the term of "casing", and formed for example by an assembly of tubes applied against the formations of the subsoil 14. The well 12 may also include at least one inner tubular duct 22 with a smaller diameter mounted in the outer tubular duct 20. In certain cases, the well 12 is without any duct 20, 22.

The inner tubular duct 22 is generally designated as "production tubing". It is formed with a metal assembly of metal tubes. It is wedged inside the outer tubular duct 20 for example by linings 24.

The well 12 includes a well head stuff at the surface which selectively closes the outer tubular duct 20 and said or each inner tubular duct 22. The well head 26 includes a plurality of selective access valves inside the outer tubular duct 20 and inside the inner tubular duct 22.

The installation 10 includes an intervention and measurement downhole assembly 30 intended to be lowered into the well 12 through the inner tubular duct 22, and a conveying cable 32 for deploying the downhole assembly 30 in the well 12.

The intervention installation 10 further includes a sealing and alignment assembly 34 of the cable 32, mounted on the well head 26, an assembly 36 for deploying the cable 32, positioned in the vicinity of the well head 26, and a surface control unit 38.

The sealing and alignment assembly 34 may comprise an airlock 42 mounted on the well head 26, allowing introduction of the downhole assembly 30 into the well 12. It also comprises a stuffing box 44 for achieving the seal around the cable 32 and return pulleys 46 respectively attached on the stuffing box 44 and on the well head 26 in order to send back the cable 32 towards the deployment assembly 36.

The stuffing box 44 is capable of achieving a seal around the smooth outer surface of the cable 32, for example via annular linings applied around this surface or/and by injecting a fluid between the outer surface and the wall of the stuffing box 44.

**In** a so-called "open well" or "open hole" alternative, in which there is no casing 20, the assembly 34 is mainly an assembly for aligning the cable, and may not comprise any sealing device.

The deployment assembly 36 includes a winch 37A provided with a drum 37B. The winch 37A and its drum 37B are laid on the ground or are optionally loaded onboard a vehicle (not shown). A spooling sleeve may be fitted around the drum 37B. The winch 37A is capable of winding or unwinding a given length of cable 32 for controlling the displacement of the downhole assembly 30 in the well 12 when moving up or down respectively. An upper end 41A of the cable may be attached onto the drum 37B.

The surface control unit 38 comprises a processor unit 48 and a first telemetry unit 50 for communicating with devices situated at the well site, for instance the winder 37B and optionally the downhole assembly 30, and a second telemetry unit 52 for communication with computers remote from the well site.

The downhole assembly 30 comprises a hollow case comprising an operating assembly 58 comprising one or several measuring module and tools such as jarring tools or perforating tool or sensors. In some embodiment, the downhole assembly is capable of being controlled from the surface by electrical signals transmitted through the cable 32. In this case, the downhole assembly also comprises a telemetry module 60 for communicating with the surface control unit 38 via the cable 32 via any communication system.

The cable 32 extends between an upper end 41A, attached on the deployment assembly 36 at the surface, in particular on the drum 37B, and a lower end 41B, intended to be introduced into the well 12. The downhole assembly 30 is suspended from the lower end 41B of the cable 32.

The length of the cable 32, taken between the ends 41A, 41B may be greater than 1,000 m and is notably greater than 1,000 m and comprised between 1,000 m and 100,000 m.

In an embodiment, the cable is a slickline cable, i.e., a cylindrical solid cable having a smooth outer surface 40. In this case, the cable 32 has an outer diameter of less than 8 mm, advantageously less than 6 mm. The central core is formed by a single strand of solid metal cable, designated by the term "piano wire"

In another embodiment, the cable 32 is a wireline cable comprising one or more conductors to transmit downhole power to the downhole assembly.

Embodiments of cables that can be used as cable 32 in the installation will be described below.

A cable according to a first example not forming part of the present invention is shown on FIG. 3 and 4. As shown on the cross section of FIG. 3, the cable 100 comprises a core 102 including a conductor 104 and a polymer matrix 106 surrounding the conductor. The core has a cylindrical shape and generally extends for thousands of meters along its longitudinal axis L. The core may be a cable line, that is available off-the-shelf, a cable line assembly or a core that has been specially designed for the cable 100.

The cable 100 also includes two layers of reinforcing elements 107, a first internal layer 108 contacting the core and a second external layer 110 contacting the internal layer 108. Each reinforcing element comprises a fiber bundle including reinforcement fibers impregnated with a polymer. In other words, the reinforcement fibers of the fiber bundle are embedded in a polymer matrix. The reinforcing fibers may be carbon, aramid, basalt or glass fibers. The polymer may contain a thermoset, such as epoxy, benzoxazine, bismaldeide or cyanate ester and/or a thermoplastic such as polyketone, including polyetherketone (PEK) or polyetheretherketone (PEEK); polyphenylene sulfide (PPS) or Polyetherimide (PEI). The composition of the reinforcing element 107 may be chosen so that it comprises between 50% and 80% of reinforcement fibers & 50 to 20% of polymer in volume. The reinforcing element 107 is generally of cylindrical shape with predetermined cross-section (rectangular, circular, etc.) and, as the core, it is several thousands meter long.

As can be seen on FIG. 3, each reinforcing element 107 is tubed by a coating 112 made of thermoplastic. The coating is applied on the external surface of the reinforcing element, on its entire periphery and length. The composition of the coating may include fluorinated polymer or elastomer, such as perfluoroalkoxy (PFA), polytetrafluoroethylene (PTFE), a polyketone, including polyetherketone (PEK) or polyetheretherketone (PEEK); polyphenylene sulfide (PPS) or Polyetherimide (PEI) . As can be seen on FIG. 3, the coating forms a layer of material surrounding the prepared reinforcing element 107, at the external surface of the reinforcing element 107. This differentiates from an impregnation as mentioned above in which the whole element is filled with the impregnation material.

Such cable being a composite cable and the reinforcing element (made of fibers and polymer) having a lower density than the metallic armor wires (for instance, carbon fibers and PEEK each being about 6 times less dense than steel), it enables to significantly decrease the weight of the cable. The mechanical properties of the reinforcement fibers of the reinforcing element 107, in particular its high strength, enable to optimize the mechanical properties of the cable so that it is able to perform a downhole operation.

The reinforcing elements 107 are arranged on the cable so that each reinforcing element is able to move relative to the core and at least another reinforcing element, in particular all of the other reinforcing elements. The reinforcing elements are therefore not embedded in a common polymer matrix immobilizing the reinforcing elements relative to the core and the other reinforcing elements placed in the common polymer matrix. The reinforcing elements 107 of the first layer 108 may be each wrapped helically around the cable with a same wrapping angle and are arranged so that each reinforcing element of the layer contacts the two adjacent reinforcing elements, as well as the core, as can be seen on FIG. 4. The wrapping angle is the angle between the reinforcing element and the longitudinal axis. An example of wrapping angle α is shown on FIG. 1 for the cable of the prior art. In the embodiment of FIG. 3 &4, the angle may be set between 5° and 30°, in particular below 20°.

The thermoplastic coating 112 applied on the reinforcing element 107 is a lubricant that enables to reduce wear and friction induced by the movement between the reinforcing elements, as well as the general friction of the cable in the wellbore.

Further, the reinforcing elements being able to move relative to each other leverages the good properties of reinforcement fibers of said reinforcing element (i.e., high strength and low density) without creating a solid cylinder and keeping the ability of each reinforcing element to not damage when bending, which is necessary for such a cable that is stored wrapped on a drum. As it can be seen on FIG. 4 where cable is wrapped around a cylindrical element, as each of the reinforcing elements 107 has one or more degrees of freedom relative to the other reinforcing elements, the arrangement of reinforcing elements 107 may slightly be modified in order to minimize the constraints when bending the cable. For instance, it can be seen on FIG. 4 in locations 114 & 116 that the reinforcing elements move apart from each other when bent. Therefore this arrangement enables a longer life for the cable and a better conservation of its mechanical properties even when not in use and wound on the drum for a significant duration.

Besides, regarding rapid gas decompression, as the reinforcing elements are not linked together (i.e., not embedded in a matrix), gas can come out from the cable very quickly when pulling the cable out of hole (and passing from the high pressure of the well to the atmospheric pressure), without breaking damages to the cable. In other words, the cable is not prone to jail gas internally and therefore not subject the phenomenon of rapid gas decompression when the cable is conveyed out of hole and subjected to a significant pressure decrease.

When the cable includes more than one layer, the wrapping angle of the reinforcing elements in one layer may be different from the wrapping angle of reinforcing elements in another layer. Furthermore, the wrapping direction of the reinforcing elements may be different in each layer, as can be seen in FIG. 4 in zone 116 where the internal layer 108 is visible due to the spreading of the fibers of the external layer 110. In other words, the sign of the wrapping angle in a trigonometric space may be different for the first and second layer 108,110. In a particular embodiment, the wrapping angle of the first layer (relative to the longitudinal axis of the cable) is opposite to the wrapping angle of the second layer.

The tubed reinforcing elements may be conformed to match a contacting surface (i.e., the external surface) of the core and a contacting surface of the adjacent reinforcing elements as shown on FIG. 3, in particular, for the first layer of fiber 108. On FIG. 3, the reinforcing elements of the first layer takes a substantially trapezoidal shape in this configuration. Such conformation may be performed applying a compression on the cable as will be explained in more details in relationship with a manufacturing method of the fiber.

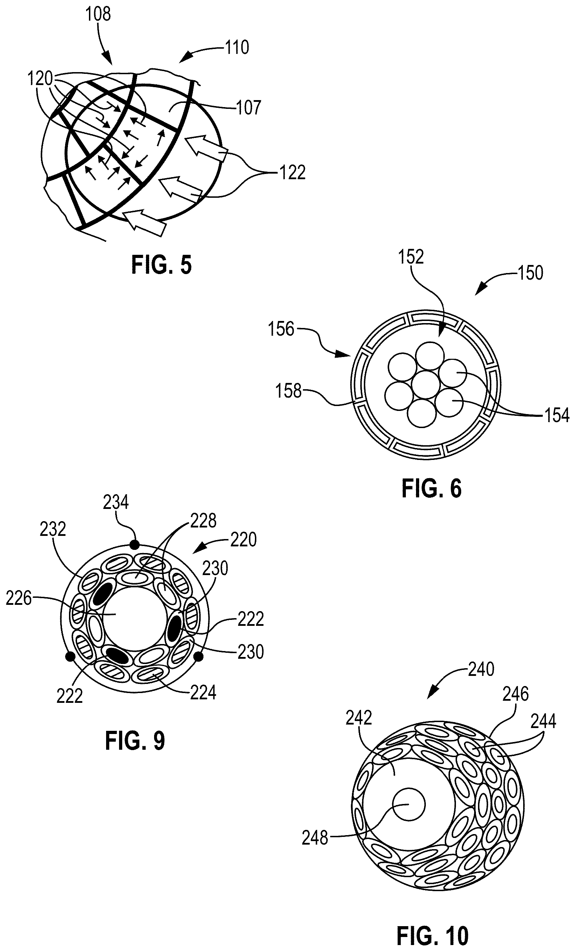

Such conformation enables to perform more easily the sealing of the cable when in the wellbore. Indeed, as explained in relationship with FIG. 2, when the cable is lowered in the wellbore, the cable passes in a stuffing box 44 that provides a pressure barrier between the well (high pressure) and the surface (low pressure). The stuffing box is shown in more details in FIG. 2B. It comprises packers 400 that apply a high pressure on the whole periphery of the cable as shown by the arrows 402. Therefore, the packers 400 compress the reinforcing elements 107 against the core so that the reinforcing elements press against the core and/or each other. This is shown in particular in FIG. 5, showing schematically the efforts 120 that each tubed reinforcing element 107 (represented by a trapeze) applies on the adjacent elements when subject to a compression 122 on its entire periphery.. Such compression is maintained in the wellbore due to the high pressure of the wellbore. In view of the trapezoidal shape of the reinforcing elements, the entire periphery of the reinforcing elements of the first layer is contacting with the adjacent elements (core and adjacent reinforcing elements) ensuring a barrier between the core and the well fluids, providing sealing even though the reinforcing elements are not embedded in a polymer matrix.

Further, such cable does not necessitate any grease injection to obtain leaktightness at the well head as the ability of the reinforcing elements to move relative to each other and the ability of the tubing around each reinforcing element to deform enables the cable to adapt to the shape of the packers upon compression.

In an example , the coatings 112 of at least two adjacent reinforcing elements 107 may be bonded to each other, for instance by plastic welding. In this case the reinforcing elements are still able to move relative to each other as the reinforcing element 107 may be configured to move relative to the coating 112, in particular slide in the tubing. The coating may in particular comprise a fluorinated polymer or elastomer that does not adhere strongly to the reinforcing element.

The disclosure also includes additional examples not forming part of the present invention as shown on FIG. 6-10. Only the differences of these examples with the first examples are highlighted.

As shown on the embodiment of FIG. 6, the cable 150 includes a core 152 that comprises seven conductors 154. In this embodiment, the cable is a wireline heptacable and the core is a standard core for such cable. Further, on FIG. 6, the reinforcing elements 156 are flat, having a rectangular cross section with a length at least five times longer than the width, also wrapped helically around the core and tubed with a thermoplastic coating 158. Reinforcing elements 156 with such cross section allows smaller cable radius. However, it is to be noted that other cross section of the reinforcing element (triangular, polygonal, trilobal, etc.) are also part of the current disclosure.

In the example of FIG. 6, the cable comprises only one layer of reinforcing elements wrapped around the core. It is to be noted that the cable may comprise any number of reinforcing element layers and not only one or two.

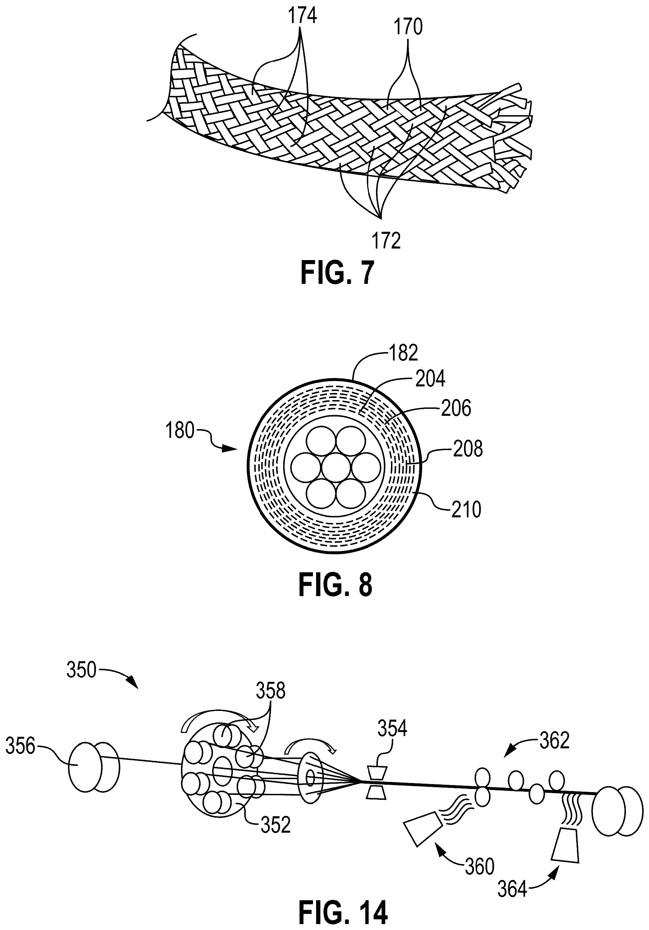

In another example, the reinforcing elements of at least one layer may be arranged as a fabric containing entangled tubed reinforcing elements with different orientations. In such fabric, the reinforcing elements with different wrapping orientations cross at several locations but are still able to move relative to each other. In an example of such fabric, the reinforcing elements 170 are braided, having reinforcing elements in two different wrapping orientations 172, 174 as shown on FIG. 7. On the example of FIG. 7 the proportion of reinforcing elements in each orientation 172, 174 is about 50%. However, any other way of entangling the reinforcing elements is considered as part of the disclosure. For instance, the fabric may comprise reinforcing elements in more than two orientations or have reinforcing elements of each orientation in different proportions. Further, when the cable comprises several layers, only one of the layers, for instance the external layer, may be made of such fabric of entangled reinforcing elements.

In another example shown on FIG. 8, a cable 200 includes an outer jacket 202. The outer jacket may be a thermoplastic jacket, for instance made of fluorinated polymer or elastomer, such as perfluoroalkoxy (PFA), polytetrafluoroethylene (PTFE), and/or a polyketone, including polyetherketone (PEK) or polyetheretherketone (PEEK); and/or polyphenylene sulfide (PPS) and/or Polyetherimide (PEI) . The outer jacket 202 may be a thin metallic tube, for instance crimped over the cable or a metallic braid. The jacket enables to add protection from well fluid to the cable and is able to further decrease the friction and to hold the reinforcing elements together in particular in case of damages to the cable. In an embodiment, the jacket 202 may be porous, in order to avoid jailing the gas in the cable, as explained in relationship with the rapid gas decompression phenomenon. In the embodiment of FIG. 8, the cable comprises four layers 204-210 of flat reinforcing elements represented schematically but the outer jacket may be disposed on a cable having any configuration of reinforcing elements and any number of layers.

In an additional example shown on FIG. 9, the cable 220 may comprise at least one or more metallic wires 222, for instance made of copper or aluminium or copper and/or alloys comprising copper and/or aluminium, and one or more optical fibers 224 wrapped around the core 226 so as each metallic wire 222 or optical fiber 224 is able to move relative to the core and as well relative to the reinforcing elements. The optical fibers and/or metallic wires 222, 224 may be wrapped around the core in a same layer as reinforcing elements 228, as it is shown here for the metallic wires 222. Alternatively, they may be set in a different layer, and also helically wrapped around the core, as shown on FIG. 6 for the optical fibers 224. In another configuration, the optical fibers and/or metallic wires 222, 224 may extend parallel to the longitudinal axis of the core.

Having the metallic wires or optical fibers in a different layer than the reinforcing elements enables to set the wrapping angle for each type of element independently, which may be useful if the mechanical properties of the elements are not the same for instance or if specific requirements apply to one of the element.

Further, the optical fibers and/or metallic wires are tubed with a thermoplastic coating 230 like the reinforcing elements, in order to limit the friction between the different elements wrapped around the core.

In the example of FIG. 9, the core does not comprise any conductor. The conductors may be provided by the one or more metallic wires when these metallic wires are connected at the surface. In such case, the metallic wires may transmit power and/or communication signals from the surface to the downhole assembly or from the downhole assembly to the surface. However, the metallic wires could not be used as conductors but only as another type of reinforcements. Further, the core could comprise conductors and the metallic wires could be used as additional conductors.

In the example of FIG. 9, the core may be made of material with a high Young's modulus (such as polymer associated with high Young's modulus carbon fibers or including in particular the metallic wires). Thus the cable includes material with high Young's modulus at the center and a lower Young's modulus (such as polymer associated with low Young's modulus carbon fibers) closer to the external surface so that the central portion of the cable is more flexible. Indeed, such configuration enables that the elements situated at the outer diameter of the cable (reinforcing elements or metallic wires) will be able to stretch more than the core (designed to have a high Young Modulus) during bending (ie when the cable is stored on a drum) as the outer elements are subject to more constraints when bending the cable. The core having a higher Young modulus, it has higher stiffness. Therefore for the same overall cable stiffness, such configuration increases the cable resistance to bending and cable life.

Being able to place conductors elsewhere than in the core enables a greater design flexibility for the core and to obtain such configuration. For instance, the core may comprise as well one or more of a reinforcing element (including at least a bundle of reinforcement fibers and optionally a polymer matrix) also tubed with a thermoplastic coating. The reinforcing elements may be designed (ie number and type of fibers, type and portion of polymer matrix (if any)) in order to optimize the properties of the core, in particular its Young's modulus.

The optical fibers 226 may enable to measure one or more characteristic of the cable in order to predict when maintenance of the cable is needed or one or more characteristic of the wellsite and/or the formation. In order to perform such measurement the fibers may be connected to an interrogator and a detector in order to be part of a Distributed Acoustic System (DAS) as described in for instance in the US patent number 8,225,867.

In the example of FIG. 9, the cable also comprises an external liner 232 as disclosed in relationship with FIG. 8 and nude metallic wires 234 disposed around the liner. Such metallic wires 234 provide efficient electrical grounding of the cable and may either extend in a direction parallel to a longitudinal axis of the cable or to be wrapped around the outer jacket of the cable.

In another example shown on FIG. 10, a cable 240 includes a core 242 and tubed reinforcing elements 244 all extending along the longitudinal direction of the core. A jacket 246 covers the reinforcing elements and holds them together. In this case, the reinforcing elements may be disposed so that the core is not situated at the center of the cable but closer to a side of the cable to facilitate access to the core and maintenance and repair of the conductor(s) 248 situated in the core.

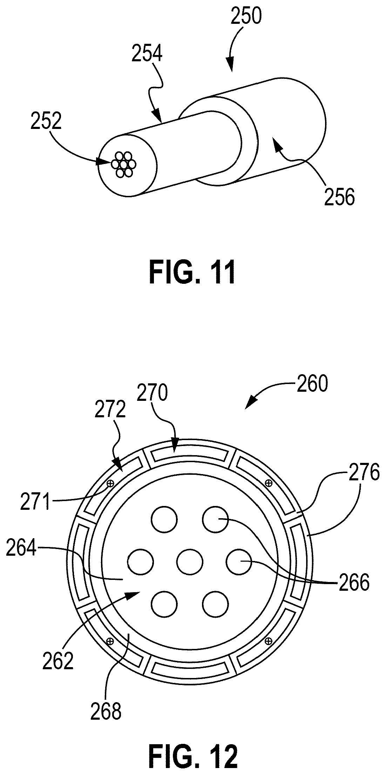

According to the present invention, metallic conducting wires and optical fiber are integrated in a reinforcing element. Such reinforcing element is disposed around the part or may be part of the core. An example of reinforcing element 250 is shown on FIG. 11. The reinforcing element 250 includes metallic wires 252 (that can be used as conductors as explained in relationship with FIG. 9) in its center. A fiber bundle 254 is arranged around the metallic wires and a polymer matrix impregnates the fiber bundle and the conductor. As discussed in relationship with the other examples, the reinforcing element is tubed by a thermoplastic coating 256. Such reinforcing element may comprise any arrangement of metallic conducting wires and fiber bundle (for instance, the metallic wires are not disposed at the center). When the metallic wires are used as conductors, the thermoplastic coating as well as the polymer matrix being an insulating material, it can be used to insulate the conductor from the other conductors. The metallic conducting wires are embedded with an optical fiber in the fiber bundle. Such architecture enables to gather several functions (electrical and/or optical, as well as mechanical function) in the reinforcing element and to optimize the dimensions of the cable.

An example of cable 260 including such reinforcing element is shown on FIG. 12. Such cable 260 includes a core 262 having a reinforcing element including a fiber bundle of reinforcement fibers and seven conductors 266 made of metallic wires embedded in the bundle. The conductors are made of metallic wires. The reinforcing element is tubed with a thermoplastic coating 268. The cable also comprises a first layer of reinforcing elements 270, 272 tubed with a thermoplastic coating 276 disposed around the core. The reinforcing elements 272 include a fiber optic 271 embedded in the bundle of reinforcement fibers. In this embodiment, the reinforcing element 262 is of greater dimensions than the reinforcing elements 270, 272 of the layer surrounding the core. More generally the reinforcing elements of the cable can have different dimensions and shape.

All of the cables as per the examples and embodiments above have been described as wireline cable in which the armor wires are replaced by the fibers enabling to decrease the density of the cable and its weight. However, such a cable design could also be applicable for other downhole cable such as a slickline cable as well as cable that have application at the surface, at the well site or in other fields of application. In this case, the dimension of the single wire could be reduced compared to current cables, also enabling to decrease the cable weight.

The cable described in the disclosure might also be used for other purpose that downhole use.

In the following a method for manufacturing the cable will be disclosed as well as a method for operating the cable.

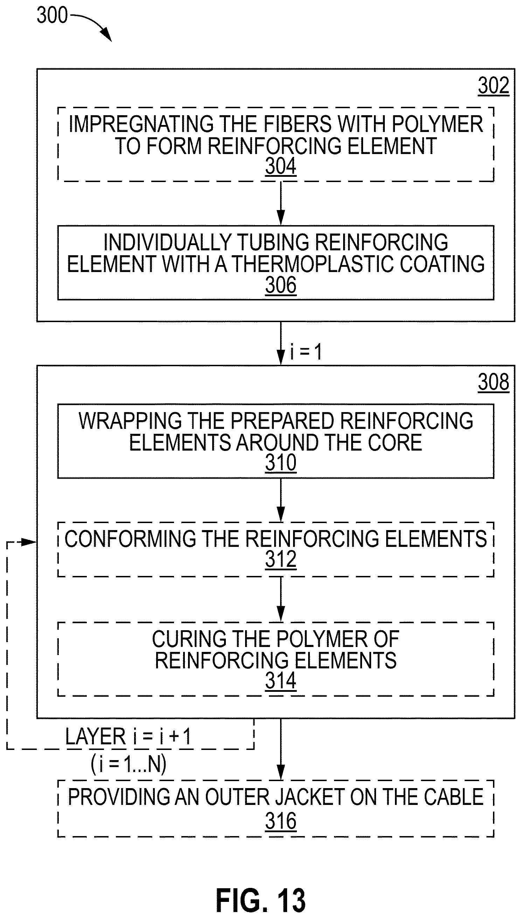

The method 300 for manufacturing the cable is described in relationship with FIG. 13 & 14. In the flowchart of FIG. 13, the operations that are optional are represented in block with dotted line while the operations that are mandatory are represented in block with plain line. FIG. 14 shows a portion of an exemplary manufacturing line 350 of a cable according to the disclosure.

It first comprises preparing the reinforcing elements (block 302). To perform this operation, each reinforcing element is tubed individually by the thermoplastic coating, generally via an extrusion process (block 306). The fiber bundle of the reinforcing elements is impregnated by the polymer matrix (block 304) before they are coated by passing the fibers in a polymer bath. The reinforcing element, after operation 304, may be called a prepreg. During or before impregnation, the fiber bundle can also be conformed so that the prepreg has a predefinite section (such as cylindrical or flat). The reinforcing element comprises a metallic conducting wire and/or an optical fiber, and the fiber bundle is arranged around the metallic wire and/or optical fiber before impregnation. Once the thermoplastic tubing has been extruded on the reinforcing elements, such prepared reinforcing elements are stored on drum.

When metallic wires or optical fibers are included in the cable, they may be prepared using the same tubing operation as described in operation 306 and stored on a drum once tubed.

The manufacturing method then comprises providing a layer of reinforcing elements on the core (block 308). The core may have been prepared separately, for instance if it is constituted of several materials but may be a standard core. If the core comprises a reinforcing element, it is prepared following the same preparation operations as disclosed above.

The manufacturing method includes wrapping the tubed reinforcing elements around the core, for instance helically wrapping the reinforcing elements over the core (block 310) using a cable assembly machine, such as a planetary assembly machine 352 and a die 354 to give the cable a regular shape. In the embodiment shown on FIG. 14, each of the core and a number of reinforcing elements is unwound from a different drum 356; 358 and pass into the planetary machine 352 that enables a rotation of the reinforcing elements while the core only translates. Alternatively, the fibers might be braided as explained above.

Once the reinforcing elements are wrapped around the core, the manufacturing method may also comprise conforming the reinforcing elements to match the surface of the core and adjacent reinforcing elements by applying a compression on the cable once assembled (block 312), for instance using compressing rolls 362 and a heater 360 for facilitating deformation of the polymer matrix (if any).

In this case a high pressure is applied on the whole periphery of the cable so that the tubed reinforcing elements, that is soft, in particular because of the uncured polymer matrix of the prepreg, deform and conform to and press against the adjacent elements, i.e., core and fibers.

The manufacturing also comprises, when the reinforcing elements are impregnated, curing the polymer matrix of the reinforcing elements (block 314) with a heater 360. Indeed, the uncured reinforcing elements being assembled on the cable have more flexibility and may be assembled more easily than if the reinforcing elements were cured individually after impregnation. Once they are cured, the reinforcing elements have better mechanical properties than uncured. The core and the reinforcing elements may be stored on a drum.

If there are different layers of fibers on the cable, the same operation is renewed with the cable having core and wrapped fibers at the center of the cable assembly machine. When there are several layers of reinforcement elements, the optional conforming and curing operation may be performed only once after all of the layers of reinforcing elements have been assembled on the core. The manufacturing method may also comprise providing an outer jacket on the cable, for instance crimping a metallic tube or extruding a thermoplastic external layer (block 314). This operation is not represented on the manufacturing line of FIG. 11.

As explained in relationship with all the embodiments above, the cable according to the disclosure has mechanical properties adapted to a downhole use in particular with a high strength and good resistance to bending stress while enabling to significantly reduce the weight of the cable and therefore the power for operating the cable and the footprint of the well site installation. The cable may be used in other fields of technology.

## Claims

1. A cable (260) comprising
a core (262); and
a plurality of reinforcing elements (250; 270, 272) arranged around the core (262) so as to cover the core (262), wherein each reinforcing element (250; 270, 272) includes metallic conducting wires (252; 266) and a bundle of reinforcement fibers (254) arranged around the metallic conducting wires (252; 266) with a polymer matrix impregnating the bundle of reinforcement fibers and the metallic conducting wires (252; 266) and wherein each reinforcing element (250, 270, 272) is individually tubed within a thermoplastic coating (256; 276) and wherein at least one tubed reinforcing element (272) includes an optical fiber (274) embedded within the bundle of reinforcement fibers, the cable being configured so that each tubed reinforcing element (250, 270, 272) is able to move relative to the core (262) and to at least another tubed reinforcing element (250, 270, 272) and wherein the thermoplastic coating (276) is a lubricant configured to reduce wear and friction induced by movement between the tubed reinforcing elements (250, 270, 272).

2. The cable of claim 1, wherein the tubed reinforcing elements (250, 270, 272) are helically wrapped around the core (102).

3. The cable of claim 2, wherein the wrapping angle of each tubed reinforcing element (250, 270, 272) is less than 30°, preferable 20°, wherein the wrapping angle is the angle between a longitudinal axis of the core (262) and the reinforcing element (250, 270, 272).

4. The cable of any preceding claim, wherein the core (262) comprises one or more reinforcing elements also tubed within a thermoplastic coating, each reinforcing element including a bundle of reinforcement fibers.

5. The cable of any preceding claim, wherein the plurality of tubed reinforcing elements (250, 270, 272) are arranged in at least one layer around the core (262), each tubed reinforcing element (250, 270, 272) of a first layer adjacent the core (262) contacting two adjacent tubed reinforcing elements (250, 270, 272) of the first layer and the core (262).

6. The cable of claim 5, wherein each tubed reinforcing element (250, 270, 272) of the first layer is conformed to match a contacting surface of the core (262) and of the adjacent tubed reinforcing elements (107) by applying compression to the cable.

7. The cable of claim 6, wherein the plurality of tubed reinforcing elements (250, 270, 272) are arranged in a first layer wrapped around the core (262) and a second layer wrapped around the first layer.

8. The cable of any preceding claim, being a wireline cable for downhole use.

9. A wellbore installation including:
a. a winch (37A) having a drum (37B) for winding a cable (32);
b. a downhole tool (30) configured to be lowered into a wellbore (12);
c. the cable (32) according to any preceding claim, having a first end (41A) wound around the drum (37B) and the downhole tool (30) suspended from a second end (41B).

10. A method of manufacturing a cable (260), including:
extruding a thermoplastic coating (256, 276) around each of a plurality of reinforcing elements (250, 270, 272) so as to form a tube around each reinforcing element (250, 270, 272), wherein each tubed reinforcing element includes metallic conducting wires (252; 266) and a bundle of reinforcement fibers (254) arranged around the metallic conducting wires (252; 266) with a polymer matrix impregnating the bundle of reinforcement fibers and the metallic conducting wires (252; 266) and wherein at least one tubed reinforcing element (272) of the plurality of tubed reinforcing elements (250, 270, 272) includes an optical fiber (274) embedded within the bundle of reinforcement fibers, wherein the thermoplastic coating (112) is a lubricant configured to reduce wear and friction induced by movement between the tubed reinforcing elements (107); and
arranging the plurality of tubed reinforcing elements (250, 270, 272) around a core (262) to cover the core (262) so that each tubed reinforcing element (250, 270, 272) is configured to move relative to the core (262) and to at least another tubed reinforcing element (250, 270, 272) .

11. The method of manufacturing according to 10, comprising impregnating the bundle of reinforcement fibers and metallic conducting wires (252, 266) of each tubed reinforcing element (250, 270, 272) with the polymer before extruding the thermoplastic coating (256, 276) and curing the tubed reinforcing element (107) after arranging the reinforcing elements around the core (262).

## Patentansprüche

1. Kabel (260), umfassend
einen Kern (262); und
eine Vielzahl von Verstärkungselementen (250; 270, 272), die um den Kern (262) herum angeordnet sind, um den Kern (262) zu bedecken, wobei jedes Verstärkungselement (250; 270, 272) metallische leitfähige Drähte (252; 266) und ein Bündel von Verstärkungsfasern (254), die um die metallischen leitfähigen Drähte (252; 266) herum angeordnet sind, einschließt, wobei eine Polymermatrix das Bündel von Verstärkungsfasern und die metallischen leitfähigen Drähte (252; 266) imprägniert und wobei jedes Verstärkungselement (250, 270, 272) innerhalb einer thermoplastischen Beschichtung (256; 276) einzeln eingehülst ist und wobei mindestens ein eingehülstes Verstärkungselement (272) eine optische Faser (274), die innerhalb des Bündels von Verstärkungsfasern eingebettet ist, einschließt, wobei das Kabel konfiguriert ist, sodass jedes eingehülste Verstärkungselement (250, 270, 272) in der Lage ist, sich relativ zu dem Kern (262) und zu mindestens einem anderen eingehülsten Verstärkungselement (250, 270, 272) zu bewegen und wobei die thermoplastische Beschichtung (276) ein Schmiermittel ist, das konfiguriert ist, um Verschleiß und Reibung, die durch Bewegung zwischen den eingehülsten Verstärkungselementen (250, 270, 272) verursacht werden, zu reduzieren.

2. Kabel nach Anspruch 1, wobei die eingehülsten Verstärkungselemente (250, 270, 272) schraubenförmig um den Kern (102) herum gewickelt sind.

3. Kabel nach Anspruch 2, wobei der Wickelwinkel jedes eingehülsten Verstärkungselements (250, 270, 272) weniger als 30°, vorzugsweise 20°, beträgt, wobei der Wickelwinkel der Winkel zwischen einer Längsachse des Kerns (262) und dem Verstärkungselement (250, 270, 272) ist.

4. Kabel nach einem der vorstehenden Ansprüche, wobei der Kern (262) ein oder mehrere Verstärkungselemente, die ebenfalls innerhalb einer thermoplastischen Beschichtung eingehülst sind, umfasst, wobei jedes Verstärkungselement ein Bündel von Verstärkungsfasern einschließt.

5. Kabel nach einem der vorstehenden Ansprüche, wobei die Vielzahl von eingehülsten Verstärkungselementen (250, 270, 272) in mindestens einer Schicht um den Kern (262) herum angeordnet ist, wobei jedes eingehülste Verstärkungselement (250, 270, 272) einer ersten Schicht angrenzend an den Kern (262) jeweils zwei angrenzende eingehülste Verstärkungselemente (250, 270, 272) der ersten Schicht und den Kern (262) berührt.

6. Kabel nach Anspruch 5, wobei jedes eingehülste Verstärkungselement (250, 270, 272) der ersten Schicht durch Ausüben von Kompression auf das Kabel angepasst ist, um einer Berührungsoberfläche des Kerns (262) und der angrenzenden eingehülsten Verstärkungselemente (107) zu entsprechen.

7. Kabel nach Anspruch 6, wobei die Vielzahl von eingehülsten Verstärkungselementen (250, 270, 272) in einer ersten Schicht, die um den Kern (262) herum gewickelt ist, und einer zweiten Schicht, die um die erste Schicht herum gewickelt ist, angeordnet sind.

8. Kabel nach einem der vorstehenden Ansprüche, das ein Wireline-Kabel zur Verwendung in einem Bohrloch ist.

9. Bohrungsanlage, die einschließt:
a. eine Winde (37A), die eine Trommel (37B) zum Aufwickeln eines Kabels (32) aufweist;
b. ein Bohrlochwerkzeug (30), das konfiguriert ist, um in eine Bohrung (12) abgesenkt zu werden;
c. das Kabel (32) nach einem der vorstehenden Ansprüche, wobei ein erstes Ende (41A) um die Trommel (37B) gewickelt ist und das Bohrlochwerkzeug (30) an einem zweiten Ende (41B) aufgehängt ist.

10. Verfahren zum Herstellen eines Kabels (260), das einschließt:
Extrudieren einer thermoplastischen Beschichtung (256, 276) um jedes einer Vielzahl von Verstärkungselementen (250, 270, 272) herum, um eine Hülse um jedes Verstärkungselement (250, 270, 272) herum auszubilden, wobei jedes eingehülste Verstärkungselement metallische leitfähige Drähte (252; 266) und ein Bündel von Verstärkungsfasern (254), die um die metallischen leitfähigen Drähte (252; 266) herum angeordnet sind, einschließt, wobei eine Polymermatrix das Bündel von Verstärkungsfasern und die metallischen leitfähigen Drähte (252; 266) imprägniert und wobei mindestens ein eingehülstes Verstärkungselement (272) der Vielzahl von eingehülsten Verstärkungselementen (250, 270, 272) eine optische Faser (274), die innerhalb des Bündels von Verstärkungsfasern eingebettet ist, einschließt, wobei die thermoplastische Beschichtung (112) ein Schmiermittel ist, das konfiguriert ist, um Verschleiß und Reibung, die durch Bewegung zwischen den eingehülsten Verstärkungselementen (107) verursacht werden, zu reduzieren; und
Anordnen der Vielzahl von eingehülsten Verstärkungselementen (250, 270, 272) um einen Kern (262) herum, um den Kern (262) zu bedecken, sodass jedes eingehülste Verstärkungselement (250, 270, 272) konfiguriert ist, um sich relativ zu dem Kern (262) und zu mindestens einem anderen eingehülsten Verstärkungselement (250, 270, 272) zu bewegen.

11. Verfahren zum Herstellen nach 10, umfassend ein Imprägnieren des Bündels von Verstärkungsfasern und metallischen leitfähigen Drähten (252, 266) jedes eingehülsten Verstärkungselements (250, 270, 272) mit dem Polymer vor dem Extrudieren der thermoplastischen Beschichtung (256, 276) und Aushärten des eingehülsten Verstärkungselements (107) nach dem Anordnen der Verstärkungselemente um den Kern (262) herum.

## Revendications

1. Câble (260) comprenant
une âme (262) ; et
une pluralité d'éléments de renforcement (250 ; 270, 272) disposés autour de l'âme (262) afin de recouvrir l'âme (262), dans lequel chaque élément de renforcement (250 ; 270, 272) comporte des fils conducteurs métalliques (252 ; 266) et un faisceau de fibres de renforcement (254) disposé autour des fils conducteurs métalliques (252 ; 266), une matrice de polymère imprégnant le faisceau de fibres de renforcement et les fils conducteurs métalliques (252 ; 266), et dans lequel chaque élément de renforcement (250, 270, 272) est individuellement enrobé à l'intérieur d'un revêtement thermoplastique (256 ; 276) et dans lequel au moins un élément de renforcement (272) enrobé comporte une fibre optique (274) intégrée à l'intérieur du faisceau de fibres de renforcement, le câble étant conçu de telle sorte que chaque élément de renforcement (250, 270, 272) enrobé puisse se déplacer par rapport à l'âme (262) et par rapport à au moins un autre élément de renforcement (250, 270, 272) enrobé et dans lequel le revêtement thermoplastique (276) est du lubrifiant conçu pour réduire l'usure et le frottement provoqués par le déplacement entre les éléments de renforcement (250, 270, 272) enrobés.

2. Câble selon la revendication 1, dans lequel les éléments de renforcement (250, 270, 272) enrobés sont enroulés en hélice autour de l'âme (102).

3. Câble selon la revendication 2, dans lequel l'angle d'enroulement de chaque élément de renforcement (250, 270, 272) enrobé est inférieur à 30 °, de préférence à 20 °, dans lequel l'angle d'enroulement est l'angle formé entre un axe longitudinal de l'âme (262) et l'élément de renforcement (250, 270, 272).

4. Câble selon l'une quelconque revendication précédente, dans lequel l'âme (262) comprend un ou plusieurs éléments de renforcement également enrobés à l'intérieur d'un revêtement thermoplastique, chaque élément de renforcement comportant un faisceau de fibres de renforcement.

5. Câble selon l'une quelconque revendication précédente, dans lequel la pluralité d'éléments de renforcement (250, 270, 272) enrobés sont disposés en au moins une couche autour de l'âme (262), chaque élément de renforcement (250, 270, 272) enrobé d'une première couche adjacente à l'âme (262) étant en contact avec deux éléments de renforcement (250, 270, 272) enrobés adjacents de la première couche et avec l'âme (262).

6. Câble selon la revendication 5, dans lequel chaque élément de renforcement (250, 270, 272) enrobé de la première couche est conformé pour épouser une surface de contact de l'âme (262) et des éléments de renforcement (107) enrobés adjacents en appliquant une compression sur le câble.

7. Câble selon la revendication 6, dans lequel la pluralité d'éléments de renforcement (250, 270, 272) enrobés sont disposés en une première couche enroulée autour de l'âme (262) et une seconde couche enroulée autour de la première couche.

8. Câble selon l'une quelconque revendication précédente, qui est un câble de forage destiné à une utilisation en fond de trou.

9. Installation de puits de forage comportant :
a. un treuil (37A) ayant un tambour (37B) destiné à enrouler un câble (32) ;
b. un outil de fond de trou (30) conçu pour être abaissé dans un puits de forage (12) ;
c. le câble (32) selon l'une quelconque revendication précédente, ayant une première extrémité (41A) enroulée autour du tambour (37B) et l'outil de fond de trou (30) suspendu à une seconde extrémité (41B).

10. Procédé de fabrication d'un câble (260), comportant :
l'extrusion d'un revêtement thermoplastique (256, 276) autour de chacun d'une pluralité d'éléments de renforcement (250, 270, 272) afin de former un tube autour de chaque élément de renforcement (250, 270, 272), dans lequel chaque élément de renforcement enrobé comporte des fils conducteurs métalliques (252 ; 266) et un faisceau de fibres de renforcement (254) disposé autour des fils conducteurs métalliques (252 ; 266), une matrice de polymère imprégnant le faisceau de fibres de renforcement et les fils conducteurs métalliques (252 ; 266), et dans lequel au moins un élément de renforcement (272) enrobé de la pluralité d'éléments de renforcement (250, 270, 272) enrobés comporte une fibre optique (274) intégrée à l'intérieur du faisceau de fibres de renforcement, dans lequel le revêtement thermoplastique (112) est du lubrifiant conçu pour réduire l'usure et le frottement provoqués par le déplacement entre les éléments de renforcement (107) enrobés ; et
la disposition de la pluralité d'éléments de renforcement (250, 270, 272) enrobés autour d'une âme (262) afin de recouvrir l'âme (262) de sorte que chaque élément de renforcement (250, 270, 272) enrobé soit conçu pour se déplacer par rapport à l'âme (262) et par rapport à au moins un autre élément de renforcement (250, 270, 272) enrobé.

11. Procédé de fabrication selon 10, comprenant l'imprégnation du faisceau de fibres de renforcement et des fils conducteurs métalliques (252, 266) de chaque élément de renforcement (250, 270, 272) enrobé avec le polymère avant l'extrusion du revêtement thermoplastique (256, 276), et la polymérisation de l'élément de renforcement (107) enrobé après la disposition des éléments de renforcement autour de l'âme (262).
